# EUROPÄISCHE PATENTSCHRIFT

(11) **EP 2 742 325 B1**
(45) Veröffentlichungstag und Bekanntmachung des Hinweises auf die Patenterteilung: **29.04.2020**
(21) Anmeldenummer: 12743930.5
(22) Anmeldetag: 17.07.2012
(51) Int. Cl.: G01F 1/32, G01F 5/00, G01F 15/18, G01F 1/684

(54) **SENSOR-MODUL ZUM MESSEN UND/ODER ÜBERWACHEN VON PARAMETERN VON IN ROHRLEITUNGEN STRÖMENDEN MEDIEN SOWIE DAMIT GEBILDETES MEßSYSTEM**
SENSOR FOR MEASURING AND/OR MONITORING A PARAMETER OF A MEDIUM FLOWING IN A CONDUIT AND MEASURING SYSTEM COMPRISING SUCH A SENSOR
CAPTEUR DE MESURE ET/OU DE MONITORAGE D'UN PARAMÈTRE D'UN MEDIUM COULANT DANS UNE CONDUITE ET SYSTÈME DE MESURE COMPRENANT UN TEL CAPTEUR

(30) Priorität: 12.08.2011 DE 102011080894
(43) Veröffentlichungstag der Anmeldung: 18.06.2014
(73) Patentinhaber: Endress+Hauser Flowtec AG, 4153 Reinach (BL) (CH)
(72) Erfinder: WIEDERKEHR, Dominique, F-62880 Hagenthal-Le-Bas (FR); STRUB, Andreas, CH-4147 Aesch (CH)
(74) Vertreter: Andres, Angelika Maria
(86) Internationale Anmeldenummer: PCT/EP2012/064012
(87) Internationale Veröffentlichungsnummer: WO 2013/023859

(56) Entgegenhaltungen:
- DE-A1- 10 240 189
- DE-A1- 10 306 805
- JP-A- 62 285 022

## Beschreibung

Die Erfindung betrifft ein von außen in eine Rohrleitung einsteckbarers Sensor-Modul zum Erfassen wenigstens eines Parameters, insb. einer Strömungsgeschwindigkeit und/oder einer Volumendurchflußrate, eines in nämlicher Rohrleitung strömenden Fluids. Ferner betrifft die Erfindung ein mit einem solchen Sensor-Modul gebildetes Meßsystem zum Ermitteln wenigstens eines Parameters, insb. einer Strömungsgeschwindigkeit und/oder einer Volumendurchflußrate, eines strömenden Fluids.

In der Prozeßmeß- und Automatisierungstechnik werden für die Messung von Strömungsgeschwindigkeiten von in Rohrleitungen strömenden Fluiden, insb. schnellströmenden und/oder heißen Gasen und/oder Fluidströmen von hoher Reynoldszahl (Re), bzw. von mit der Strömungsgeschwindigkeit (u) korrespondierenden Volumen- oder Massen-Durchflußraten oftmals als Vortex- oder auch Wirbel-Durchflußmeßgeräte ausgebildete Meßsysteme verwendet. Beispiele für solche Meßsysteme sind u.a. aus der JP-A 2005227115, der JP-A 9196720, der US-A 35 87 312, der US-A 45 62 745, der US-A 54 63 904, der US-A 61 01 885, der US-B 62 98 734, der US-B 67 52 027 oder der US-B 70 73 394 bekannt. Die gezeigten Meßsysteme weisen jeweils einen in das Lumen der jeweiligen Rohrleitung hineinragenden, mithin vom Fluid angeströmten Staukörper zum Erzeugen von zu einer sogenannten Karman'schen Wirbelstrasse aufgereihten Wirbeln innerhalb des unmittelbar stromabwärts des Staukörpers strömenden Teilvolumens des Fluidstroms auf. Die Wirbel werden dabei bekanntlich mit einer von der Strömungsgeschwindigkeit abhängigen, möglichst proportionalen Ablöserate (*1*/*f_{Vtx}*) am Staukörper generiert. Ferner weisen die Meßsystem ein in den Staukörper integriertes bzw. mit diesem verbundenes oder ein stromabwärts desselben, nämlich im Bereich der Karman'schen Wirbelstrasse in die Strömung hineinragendes, Wandlerelement auf. Das - zumeist paddelförmig ausgebildete - Wandlerelement dient dazu, ein Sensorsignal zu liefern, das mit einem innerhalb des Fluids herrschenden, infolge der Karman'schen Wirbel periodischen Schwankungen unterworfenen Druck korrespondiert, mithin eine mit der Ablöserate der Wirbel korrespondierende Signalfrequenz (∼*f_{Vtx}*) aufweist. Nachdem Vorraussetzung für die - bekanntlich über die Strouhal-Zahl (*Sr* ∼ *f_{Vtx}*/*u*) gefaßte - angestrebte Proportionalität von Strömungsgeschwindigkeit und Wirbelablöserate eine möglichst hohe ReynoldsZahl von über 20000 sowie ein zunächst möglichst ungestörtes, stationär ausgebildetes Strömungsprofil im Bereich unmittelbar vor dem Staukörper sind, sind für Meßsystem der vorgenannten Art üblicherweise Vorlaufstrecken von mehr als dem 10-fachen der Nennweite der Rohrleitung empfohlen.

Für Rohrleitungen mit großer Nennweite, nämlich DN 100 (Innen-Durchmesser =100 mm) oder größer, werden wegen der ansonsten sehr aufwendigen Staukörper häufig sogenannte "Insertion-type"-Wirbel-Durchflußmeßgeräte verwendet, nämlich Meßsysteme der vorgenannten Art, bei denen, wie beispielsweise auch in den bereits erwähnten JP-A 2005227115, JP-A 9196720, US-A 45 62 745 bzw. US-B 67 52 027 gezeigt, Staukörper und Wandlerelement gemeinsam in einem von außen durch die Rohrwand der Rohrleitung einsteckbares, mithin wesentlich kürzer als die Nennweite realisierbares Sensor-Modul integriert sind. Weitere derartige Sensoren sind aus DE 102 40 189 A1 und JP 62 285 022 A bekannt. Das Sensor-Modul ist ferner mit einem - zumeist wiederlösbar damit verbundenen und/oder druck- und schlagfest gekapselten, ggf. auch nach außen hin hermetisch abgedichteten - Elektronik-Modul verbunden. Elektronik-Module für industrietauglich Meßsysteme weisen üblicherweise eine entsprechende, mit dem Wandlerelement via Anschlußleitungen, ggf. unter Zwischenschaltung elektrischer Barrieren und/oder galvanischer Trennstellen, elektrisch verbundene Umformer-Elektronik zum Verarbeiten des wenigstens einen vom Wandlerelement erzeugten Sensorsignals und zum Erzeugen von digitalen Meßwerten für die jeweils zu erfassende Meßgröße, nämlich die Strömungsgeschwindigkeit, die VolumenDurchflußrate und/oder die Massen-Durchflußrate, auf. Die üblicherweise in einem Elektronik-Gehäuse aus Metall und/oder schlagfestem Kunststoff untergebrachte Umformer-Elektronik industrietauglicher bzw. in der industriellen Meßtechnik etablierter Meßsysteme stellen zudem zumeist auch standardkonforme, beispielsweise als Zweileiter-Anschluß ausgebildete bzw. mit etablierten Feldbussen kompatible, externe Schnittstellen für die Kommunikation mit übergeordneten, beispielsweise mittels Speicheprogrammierten Steuerungen (SPS) gebildete, Meß- und/oder Reglersysteme bereit.

Um bei solchen, zumeist noch mehr auf ungestörte und stationäre, mithin weitegehend determinierten Strömungsprofile angewiesenen Meßsysteme auch bei möglichst kurzer Vorlaufstrecke eine zufriedenstellende Meßgenauigkeit erreichen zu können, ist bei deren jeweiligem Sensor-Modul gelegentlich zusätzlich ein Strömungskonditionierer integriert, etwa inform einer einen definierten Strömungspfad bereitstellenden geraden Röhre mit einem im Vergleich zur Rohrleitung kleineren Kaliber, welche Röhre mit der Rohrleitung fluchtet, wobei der Staukörper zusammen mit dem Wandlerelement im Lumen der Röhre plaziert sind.

Ein Nachteil von herkömmlichen "Insertion-type"-Wirbel-Durchflußmeßgeräten ist insoweit darin zusehen, daß wegen der angestrebten kurzen Vorlaufstrecke einerseits und der durch die zumeist Standardabmaße aufweisende Bohrung anderseits stets ein Kompromiß zwischen der Effektivität des Strömungskonditionierers bzw. den diese beeinflussenden, nicht zuletzt aber durch die Bohrung vorgegebenen Einbaumaßen des Sensor-Moduls und der für das mittels des jeweiligen Sensor-Moduls gebildeten Durchflußmeßgerät tatsächliche erreichbarer Meßgenauigkeit eingegangen werden muß.

Ausgehend vom oben genannten Stand der Technik besteht eine Aufgabe der Erfindung darin, den Aufbau von Sensor-Modulen für "Insertion-type"-Durchflußmeßgeräten, insb. auch für "Insertiontype"-Wirbel-Durchflußmeßgeräten und/oder für Rohrleitung mit Nennweiten von mehr als 100 mm, dahingehend zu verbessern, daß damit auch bei kurzen Vorlaufstrecken von kleiner als einem 10-fachen der Nennweite der Rohrleitung Meßwerte für Strömungsgeschwindigkeiten bzw. für Volumen- oder Masse-Durchflußraten über einen möglichst großen Meßbereich gut reproduzierbar mit einer Meßgenauigkeit von über 99% bzw. einem Meßfehler von weniger als 1% erzielt werden kann.

Zur Lösung der Aufgabe besteht die Erfindung in einem Sensor-Modul zum Erfassen wenigstens eines Parameters, beispielsweise einer Strömungsgeschwindigkeit und/oder einer Volumendurchflußrate, eines in einer Rohrleitung strömenden Fluids. Das erfindungsgemäße Sensor-Modul umfaßt einen in einem Lumen der Rohrleitung plazierten, beispielsweise prismatoiden (nämlich von der Form eines Prismatoids) oder zylindrischen, Grundkörper mit einem sich darin von einer Einlaßöffnung bis zu einer davon entfernten Auslaßöffnung erstreckenden, mithin mit dem Lumen der Rohrleitung kommunizierenden Strömungspfad zum Führen eines vom in der Rohrleitung strömenden Fluid abgezweigten Fluid-Teilvolumens sowie ein am Strömungspfad angeordnetes, beispielsweise in diesen zumindest teilweise hineinragendes, Wandlerelement zum Erzeugen wenigstens eines vom im Strömungspfad geführten Fluid beeinflußten Sensorsignals. Der Strömungspfad des erfindungsgemäßen Sensor-Moduls weist einen in die Einlaßöffnung mündenden, beispielsweise ein kreiszylindrisches Lumen aufweisendes, Einlaufbereich, einen in die Auslaßöffnung mündenden, beispielsweise ein kreiszylindrisches Lumen aufweisendes, Auslaufbereich sowie einen mit dem Einlaufbereich und dem Auslaufbereich kommunizierenden geraden, beispielsweise ein kreiszylindrisches Lumen aufweisendes, Zwischenbereich auf, und ist so ausgebildet, daß eine gedachte Mittelachse des Zwischenbereichs nicht-parallel, beispielsweise senkrecht, zu einer gedachten Mittelachse des Einlaufbereichs und/oder nicht-parallel, beispielsweise senkrecht, zu einer gedachten Mittelachse des Auslaufbereichs ist. Zudem ist im Strömungspfad, insbesondere in dessen Zwischenbereich, ein Staukörper zum Erzeugen von, insbesondere zu einer Karman'schen Wirbelstrasse aufgereihten, Wirbeln innerhalb des im Strömungspfad geführten Fluids plaziert.

Nach einer ersten Ausgestaltung der Erfindung ist ferner vorgesehen, daß der Strömungspfad einen größten Innen-Durchmesser aufweist, der kleiner als ein kleinster Innen-Durchmesser der Rohrleitung ist. Dies im besonderen derart, daß ein Durchmesserverhältnis, definiert durch ein Verhältnis des größten Innen-Durchmessers des Strömungspfads zum kleinsten Innen-Durchmesser der Rohrleitung kleiner als 0.2, beispielsweise kleiner als 0.1 ist.

Nach einer zweiten Ausgestaltung der Erfindung ist ferner vorgesehen, daß die gedachte Mittelachse des Einlaufbereichs parallel zur gedachten Mittelachse des Auslaufbereichs ist.

Nach einer dritten Ausgestaltung der Erfindung ist ferner vorgesehen, daß die gedachte Mittelachse des Einlaufbereichs nicht-parallel, beispielsweise senkrecht, zur gedachten Mittelachse des Auslaufbereichs verläuft.

Nach einer vierten Ausgestaltung der Erfindung ist ferner vorgesehen, daß der Einlaufbereich trichterförmig ist.

Nach einer fünften Ausgestaltung der Erfindung ist ferner vorgesehen, daß der Auslaufbereich trichterförmig ist.

Nach einer sechsten Ausgestaltung der Erfindung ist ferner vorgesehen, daß die Einlaßöffnung auf einer, beispielsweise vom Fluid senkrecht angeströmten und/oder als Prallfläche für anströmendes Fluid wirkenden, ersten Seite des Grundkörpers plaziert ist, und wobei die Auslaßöffnung auf einer relativ zu nämlicher erster Seite stromabwärts angeordneten zweiten Seite des Grundkörpers plaziert ist.

Nach einer siebenten Ausgestaltung der Erfindung ist ferner vorgesehen, daß ein das den Grundkörper aufnehmenden Lumen umgebender Rohrleitungsabschnitt kreiszylindrisch ist und/oder mittels eines geraden Rohres gebildet ist. Diese Ausgestaltung der Erfindung weiterbildend ist ferner vorgesehen, daß eine die gedachte Mittelachse des Auslaufbereichs parallel zur gedachten Mittelachse nämlichen Rohrleitungsabschnitts ist. Der Strömungspfad kann aber, falls erforderlich, auch so ausgebildet sein, daß die gedachte Mittelachse des Auslaufbereichs nicht-parallel, beispielsweise auch senkrecht, zur gedachten Mittelachse nämlichen Rohrleitungsabschnitts verläuft. Alternativ oder in Ergänzung kann der Strömungspfad beispielsweise auch so ausgebildet sein, daß gedachte Mittelachse des Zwischenbereichs des Strömungspfads nicht-parallel, beispielsweise senkrecht, zu einer gedachten Mittelachse des nämlichen Rohrleitungsabschnitts ist. Nach einer achten Ausgestaltung der Erfindung ist ferner vorgesehen, daß ein das den Grundkörper aufnehmenden Lumen umgebender Rohrleitungsabschnitt kreiszylindrisch ist und/oder mittels eines geraden Rohres gebildet ist und daß eine gedachte Mittelachse des Zwischenbereichs des Strömungspfads nicht-parallel, beispielsweise senkrecht, zu einer gedachten Mittelachse des nämlichen Rohrleitungsabschnitts ist. Diese Ausgestaltung der Erfindung weiterbildend ist ferner vorgesehen, daß die Einlaßöffnung einen radialen Abstand zur gedachten Mittelachse nämlichen Rohrleitungsabschnitts aufweist, der von einem radialen Abstand, den die Auslaßöffnung zur gedachten Mittelachse nämlichen Rohrleitungsabschnitts aufweist, verschieden ist; dies z.B. auch in der Weise, daß die Einlaßöffnung einen radialen Abstand zur gedachten Mittelachse nämlichen Rohrleitungsabschnitts aufweist, der kleiner ist als ein radialer Abstand, den die Auslaßöffnung zur gedachten Mittelachse nämlichen Rohrleitungsabschnitts aufweist; und/oder daß die gedachte Mittelachse des Einlaufbereichs parallel zur gedachten Mittelachse nämlichen Rohrleitungsabschnitts ist.

Gemäß der vorliegenden Erfindung ist ferner vorgesehen, daß im Strömungspfad, beispielsweise in dessen Zwischenbereich, ein Staukörper zum Erzeugen von, beispielsweise zu einer Karman'schen Wirbelstrasse aufgereihten, Wirbeln innerhalb des im Strömungspfad geführten Fluids plaziert ist.

Nach einer zehnten Ausgestaltung der Erfindung ist ferner vorgesehen, daß das Wandlerelement ein Sensorsignal liefert, das mit einem innerhalb des im Strömungspfad geführten Fluids herrschenden, beispielsweise veränderlichen und/oder zumindest zeitweise periodischen Schwankungen unterworfenen und/oder statischen, Druck korrespondiert, beispielsweise derart, daß eine Signalfrequenz des Sensorsignals mit einer Frequenz periodischer Schwankungen eines Drucks korrespondiert.

Nach einer elften Ausgestaltung der Erfindung ist ferner vorgesehen, daß das Wandlerelement am Zwischenbereich des Strömungspfades angeordnet ist, beispielsweise derart daß es in diesen zumindest teilweise hineinragt.

Nach einer zwölften Ausgestaltung der Erfindung ist ferner vorgesehen, daß das Wandlerelement ein Sensorsignal liefert, das mit einer innerhalb des im Strömungspfad geführten Fluids herrschenden Temperatur korrespondiert.

Nach einer ersten Weiterbildung der Erfindung ist umfaßt das Sensor-Modul weiters ein Heizelement zum Eintragen von Wärme in das im Strömungspfad geführte Fluid.

Nach einer zweiten Weiterbildung der Erfindung ist umfaßt das Sensor-Modul weiters eine an der Rohrleitung, beispielsweise wieder lösbar, fixierte, beispielsweise kreiszylindrische, Hülse zum Haltern des innerhalb des Lumens plazierten Grundkörpers und/oder zum Aufnehmen von an das Wandlerelement angeschlossenen Anschlußleitungen.

Darüberhinaus besteht die Erfindung in einem Meßsystem zum Ermitteln wenigstens eines Parameters, beispielsweise einer Strömungsgeschwindigkeit und/oder einer Volumendurchflußrate, eines in einer Rohrleitung strömenden Fluids, welches Meßsystem eines der vorbeschriebenen, erfindungsgemäßen Sensor-Module sowie ein Elektronik-Modul mit einem Elektronik-Gehäuse und einer darin untergebrachten, beispielsweise via Anschlußleitungen mit dem Wandlerelement elektrisch verbundenen, Umformer-Elektronik zum Verarbeiten des wenigstens einen vom Wandlerelement erzeugten Sensorsignals umfaßt. Im besonderen ist die mit dem Wandlerelement elektrisch gekoppelte Umformer-Elektronik ferner dafür eingerichtet ist, mittels dessen wenigstens einen Sensorsignals wenigstens einen den Parameter repräsentierenden Meßwert zu generieren.

Ein Grundgedanke der Erfindung besteht darin, ein Sensor-Modul für "Insertion-type"-Durchflußmeßgeräte, insb. auch "Insertion-type"-Wirbel-Durchflußmeßgeräte, bereitzustellen, bei dem dem Wandlerelement, bezogen auf den Durchmesser bzw. den Strömungsquerschnitt des Strömungspfades, eine relativ große Vorlaufstrecke angeboten werden kann, ohne dadurch die Einbaumaße des Sensor-Moduls in Richtung der Mittelachse der das zu messende Fluid führenden Rohrleitung nennenswert vergrößern zu müssen. Dies wird dadurch erreicht, daß der Zwischenbereich des Strömungspfades senkrecht zur Mittelachse, mithin in Einschubrichtung des von außen in die Rohrleitung eingeführten Sensor-Moduls ausgerichtet ist, so daß fast die gesamte Länge des Grundkörpers des Sensor-Moduls (abzüglich der für die Bildung des Strömungspfades erforderlichen bzw. konstruktions- und fertigungsbedingter Wandbereiche) für die Bildung des Zwischenbereichs des Strömungspfades genutzt werden kann.

Ein Vorteil des erfindungsgemäßen Sensor-Modul, mithin eines damit gebildeten Meßsystems besteht ferner u.a. darin, daß dadurch auch mit in Richtung der Mittelachse der Rohrleitung, mithin in Strömungsrichtung gesehen relativ kurzen Grundkörpern und damit einhergehend mit Einschuböffnung von vergleichsweise kleinem Innen-Durchmesser eine erhebliche Verbesserung der Meßgenauigkeit von Meßsystemen der in Rede stehenden Art erzielt werden kann,

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, nicht zuletzt auch Kombinationen zunächst nur einzeln erläuterter Teilaspekte der Erfindung, ergeben sich ferner aus den Figuren der Zeichnung wie auch den abhängigen Ansprüchen an sich.

Im einzelnen zeigen:
- Fig. 1: im Längschnitt eine Rohrleitung sowie ein Meßsystem zum Messen wenigstens eines Parameters eines in der Rohrleitung strömenden Fluids; und
- Fig. 2.: im Längsschnitt ein für ein Meßsystem gemäß der Fig. 1 geeignetes Sensor-Modul.

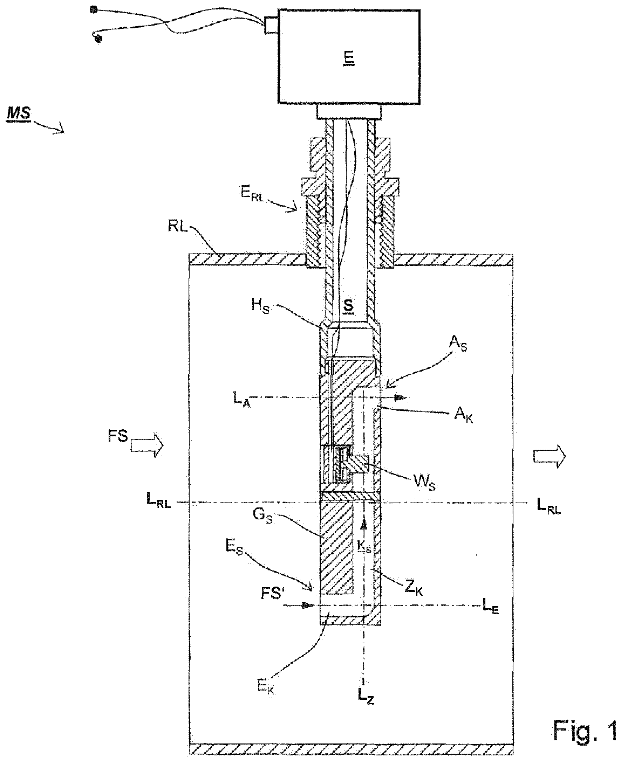

In der Fig. 1 ist ein Abschnitt einer dem Führen von strömendem Fluid dienenden - beispielsweise als Anlagenkomponente eines Wärmeversorgungsnetzes oder eines Turbinenkreislaufes ausgebildeten - Rohrleitung sowie ein Meßsystem MS mit einem in nämliche Rohrleitung eingesetzten, dem Erfassen wenigstens eines Parameters - beispielsweise einer Strömungsgeschwindigkeit und/oder einer Volumendurchflußrate und/oder einem Massendurchfluß - eines im Betrieb in der Rohrleitung strömenden Fluids FS dienenden Sensor-Modul S sowie einem daran angeschlossen Elektronik-Modul E gezeigt. Im besonderen ist die Rohrleitung dafür vorgesehen, schnell strömendes und/oder unter hohem Druck stehendes und/oder heißes Gas, wie etwa gesättigter oder überhitzter Dampf, zu führen, mithin ist das Sensor-Modul des Meßsystems im besonderen dafür ausgelegt, Parameter eines solchen Fluids bzw. einer solchen Fluidströmung zu erfassen.

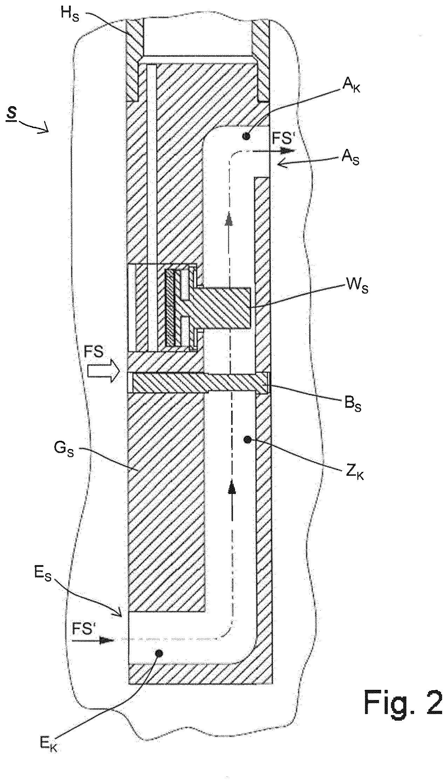

Das Sensor-Modul, von dem ein vergrößerter Ausschnitt in Fig. 2 schematisiert gezeigt ist, weist einen in einem Lumen der Rohrleitung plazierten, beispielsweise prismatoiden oder zylindrischen, Grundkörper G_{S} auf mit einem sich darin von einer Einlaßöffnung E_{S} bis zu einer davon entfernten Auslaßöffnung A_{S} erstreckenden, mithin mit dem Lumen der Rohrleitung kommunizierenden röhrenförmigen Strömungspfad K_{S} zum Führen eines vom in der Rohrleitung strömenden Fluid abgezweigten Fluid-Teilvolumens bzw. Teilstroms FS'.

Der Strömungspfad des Sensor-Moduls ist beim erfindungsgemäßen Sensor-Modul S, wie auch aus der Zusammenschau der Fig. 1 bzw. 2 ersichtlich, mittels eines in die Einlaßöffnung E_{S} mündenden Einlaufbereichs E_{K}, eines in die Auslaßöffnung mündenden Auslaufbereich A_{K} sowie eines mit dem Einlaufbereich E_{K} und dem Auslaufbereich A_{K} kommunizierenden geraden Zwischenbereich Z_{K} gebildet. Ferner ist der Strömungspfad, wie aus den Fig. 1 bzw. 2 ohne weiteres ersichtlich, so ausgebildet, daß er einen größten Innen-Durchmesser aufweist, der kleiner als ein kleinster Innen-Durchmesser der Rohrleitung ist; dies im besonderen so, daß ein Durchmesserverhältnis, definiert durch ein Verhältnis des größten Innen-Durchmessers des Strömungspfads zum kleinsten Innen-Durchmesser der Rohrleitung kleiner als 0.2, insb. kleiner als 0.1 ist. Der Strömungspfad ist gemäß einer weiteren Ausgestaltung der Erfindung zudem so ausgebildet, daß eine gedachte Mittelachse L_{Z} des Zwischenbereichs Z_{K} nicht-parallel, beispielsweise auch senkrecht, zu einer gedachten Mittelachse L_{E} des Einlaufbereichs, mithin nicht-parallel, beispielsweise auch senkrecht, zu einer gedachten Mittelachse L_{A} des Auslaufbereichs ist. Einlaufbereich, Auslaufbereich wie auch der Zwischenbereich können jeweils so geformt sein, daß ihr jeweiliges Lumen zumindest abschnittsweise im wesentlichen kreiszylindrisch ist. Alternativ oder in Ergänzung können, nicht zuletzt zwecks Verbesserung der ein- bzw. auslaufseitigen Strömungsbedingungen, der Einlaufbereich, ausgehend von der Einlauföffnung, und/oder der Auslaufbereich, ausgehend von der Auslauföffnung, auch trichterförmig ausgebildet sein.

Das Sensor-Modul S des erfindungsgemäßen Meßsystems ist von außen durch eine in einer Rohrwand eines den Grundkörper aufnehmenden Rohrleitungsabschnitts RL der Rohleitung eingeformte - hier von einem Stutzen gefaßte - Einschuböffnung E_{RL} hindurch in das Lumen der Rohrleitung eingeführt und im Bereich der Einschuböffnung - beispielsweise auch wieder lösbaran der Rohrwand fixiert. Im besonderen ist der Grundkörper G_{S} des Sensor-Moduls S kürzer als die Nennweite des dieses aufnehmenden Rohrleitungsabschnitts, insb. auch kürzer als die Hälfte nämlicher Nennweite, ausgebildet, mithin so im Lumen plaziert, das ein freies Ende des Sensor-Moduls S, mithin des Grundkörpers G_{S}, von dem der Einschuböffnung diametral entgegensetzten Bereich der Rohrwand einen Abstand aufweist, beispielsweise so, daß nämlicher Abstand mehr als die Hälfte der Nennweite des Rohrleitungsabschnitts ist.

Jener Rohrleitungsabschnitt RL der Rohrleitung, der das den Grundkörper G aufnehmende Lumen umgibt, sollte - nicht zuletzt zwecks Bereitstellung eines ausreichend stationären bzw. weitgehend ungestörten Strömungsprofils stromaufwärts des Sensor-Moduls - möglichst mittels eines über eine Länge von mehr als dem Doppelten der Nennweite der Rohrleitung hinweg gerade, mithin innen im wesentlichen kreiszylindrisch geformten Rohres gebildet sein. Gemäß einer weiteren Ausgestaltung der Erfindung ist der Grundkörper G so ausgebildet und so innerhalb des Rohrleitungsabschnitts RL plaziert, daß die Einlaßöffnung einen radialen Abstand zu einer gedachten Mittelachse L_{RL} nämlichen Rohrleitungsabschnitts aufweist, der von einem radialen Abstand, den die Auslaßöffnung zur gedachten Mittelachse L_{RL} nämlichen Rohrleitungsabschnitts aufweist, verschieden ist. Die Einlaßöffnung kann dabei beispielsweise einen radialen Abstand zur gedachten Mittelachse nämlichen Rohrleitungsabschnitts aufweisen, der kleiner ist als ein radialer Abstand, den die Auslaßöffnung zur gedachten Mittelachse L_{RL} nämlichen Rohrleitungsabschnitts RL aufweist.

Nach einer anderen Ausgestaltung der Erfindung ist der Grundkörper G_{S} ferner so ausgebildet und so relativ zur Rohrleitung ausgerichtet, daß eine gedachte Mittelachse L_{Z} des Zwischenbereichs des Strömungspfads K_{S} nicht-parallel, beispielsweise auch senkrecht, zur gedachten Mittelachse L_{RL} des vorgenannten Rohrleitungsabschnitts ist; dies im besonderen auch so, daß die gedachte Mittelachse des Auslaufbereichs parallel zur gedachten Mittelachse L_{RL} nämlichen Rohrleitungsabschnitts ist. Falls erforderlich kann nämliche gedachte Mittelachse L_{A} des Auslaufbereichs aber auch nicht-parallel, beispielsweise auch senkrecht, zur gedachten Mittelachse nämlichen Rohrleitungsabschnitts verlaufen, mithin kann der Auslaufbereich im Bereich des erwähnten freien Endes des Sensor-Moduls in das Lumen der Rohrleitung münden. Alternativ oder in Ergänzung kann die gedachte Mittelachse des Einlaufbereichs, wie auch in der Fig. 1 bzw. 2 schematisiert dargestellt, parallel zur gedachten Mittelachse nämlichen Rohrleitungsabschnitts ausgerichtet sein.

Der Grundkörper ist gemäß einer weiteren vorteilhaften Ausgestaltung ferner so im Lumen der Rohrleitung plaziert, daß die Einlauföffnung der Fluidströmung zugewandt ist. Beispielsweise kann die Einlaßöffnung auf einer vom Fluid senkrecht angeströmten und/oder als Prallfläche für anströmendes Fluid wirkenden ersten Seite des Grundkörpers plaziert sein.

Gemäß einer weiteren Ausgestaltung der Erfindung ist der Grundkörper ferner so plaziert, daß die Auslauföffnung bezüglich der Fluidströmung auf einer der Strömung abgewandten, beispielsweise also einer der ersten Seite mit der Einlauföffnung entgegengesetzten, mithin stromabwärts angeordneten zweiten, Seite des Grundkörpers angelegt ist. Ein - und Auslaufbereich können in vorteilhafter Weise dabei auch so ausgebildet sein, daß die gedachte Mittelachse des Einlaufbereichs parallel zur gedachten Mittelachse des Auslaufbereichs ist. Alternativ dazu können der Ein- und Auslaufbereich auch so zu einander ausgerichtet sein, beispielsweise für den erwähnten Fall, daß der Auslaufbereich im Bereich des freien Endes des Grundkörpers in das fluidführende Lumen mündet, daß die gedachte Mittelachse des Einlaufbereichs aber auch nicht-parallel, beispielsweise auch senkrecht, zur gedachten Mittelachse des Auslaufbereichs verläuft.

Zum Erzeugen wenigstens eines vom im Strömungspfad strömenden Fluid beeinflußten Sensorsignals weist das Sensor-Modul ferner ein am Strömungspfades angeordnetes, hier nämlich auch in diesen zumindest teilweise hineinragendes, Wandlerelement W_{S} auf. In besonders vorteilhafter Weise ist das Wandlerelement hierbei am Zwischenbereich des Strömungspfades angeordnet, beispielsweise also auch so, daß es in nämlichen Zwischenbereich zumindest teilweise hineinragt.

Ferner umfaßt das in der Fig. 1 gezeigte das Elektronik-Modul eine mit dem Wandlerelement elektrisch gekoppelte Umformer-Elektronik zum Verarbeiten des wenigstens einen vom Wandlerelement erzeugten Sensorsignals. Die Umformer-Elektronik ist in vorteilhafter Weise in einem, z.B. aus Metall und/oder Kunststoff hergestellten, mithin ausreichend fluid- und druckdichten, Elektronik-Gehäuse des Elektronik-Moduls untergebracht und via Anschlußleitungen mit dem Wandlerelement elektrisch verbunden. Im besonderen ist die Umformer-Elektronik ferner so eingerichtet, daß sie im Betrieb mittels des wenigstens einen Sensorsignals den wenigstens eine zu messenden Parameter des strömenden repräsentierende Meßwerte generieren kann.

Gemäß einer weiteren Ausgestaltung der Erfindung ist das Wandlerelement dafür eingerichtet, ein Sensorsignal zu liefern, das mit einem innerhalb des im Strömungspfad geführten Fluids herrschenden, beispielsweise auch veränderlichen und/oder zumindest zeitweise periodischen Schwankungen unterworfenen und/oder statischen, Druck korrespondiert. Nicht zuletzt für den vorgenannten Fall, daß ein innerhalb des im Strömungspfad geführten Fluids herrschender Druck periodischen Schwankungen unterworfen ist, ist das Wandlerelement im besonderen auch so ausgebildet, daß das davon gelieferte Sensorsignal eine Signalfrequenz aufweist, die mit einer Frequenz periodischer Schwankungen eines, beispielsweise auch statischen, Drucks korrespondiert. Alternativ oder in Ergänzung kann das Wandlerelement auch so ausgebildet sein, daß es ein Sensorsignal liefert, das mit einer innerhalb des im Strömungspfad geführten Fluids herrschenden Temperatur korrespondiert. Zwecks Eintragens von Wärme in das im Strömungspfad geführte Fluid zum Erzeugen eines definierten Wärmeflusses, mithin zum Bewirken eines mit einer Strömungsgeschwindigkeit des im Strömungspfad geführten korrespondierenden Temperaturgradienten - etwa bei Verwendung des Meßsystems als thermisches Massendurchfluß-Meßgerät - kann das Sensor-Modul ferner auch ein entsprechendes Heizelement umfassen.

Gemäß der vorliegenden Erfindung ist das mittels Sensor- und Elektronik-Modul gebildete Meßsystem als ein Wirbel-Durchflußmeßgerät ausgebildet. Hierfür ist im Strömungspfad, nämlich stromaufwärts des Wandlerelements, ein Staukörper B_{S} zum Erzeugen von Wirbeln innerhalb des im Strömungspfad geführten Fluids plaziert. Auch der Staukörper ist in vorteilhafter Weise im Zwischenbereich Z_{K} des Strömungspfades K_{S} angeordnet. Strömungspfad K_{S} und Staukörper B_{S} sind hierbei ferner so dimensioniert, daß die im Betrieb erzeugten Wirbel zumindest bei stationärer Strömung zu einer sogenannten Karman'schen Wirbelstrasse aufgereiht sind, nicht zuletzt auch in dem Bereich in dem auch das Wandlerelement W_{S} angeordnet ist.

Zum Haltern des innerhalb des Lumens plazierten Grundkörpers umfaßt das Sensor-Modul nach einer Ausgestaltung der Erfindung ferner eine an der Rohrleitung fixierte, beispielsweise im wesentlichen kreiszylindrische, Hülse H_{S}. Zudem können, wie auch in Fig. 1 schematisiert gezeigt, an das Wandlerelement W_{S} angeschlossene, die elektrische Verbindung zum Elektronik-Modul herstellende Anschlußleitungen - geschützt vor äußeren mechanischen bzw. thermischen Einflüssen - innerhalb der Hülse geführt, mithin davon aufgenommen werden. Zum Fixieren der Hülse kann beispielsweise eine mit dem vorgenannten Stutzen in Eingriff gebrachten Rohrverschraubung oder auch eine mit nämlichem Stutzen in Eingriff gebrachten Überwurfmutter dienen.

## Patentansprüche

1. Sensor-Modul (S) zum Erfassen wenigstens eines Parameters, insb. einer Strömungsgeschwindigkeit und/oder einer Volumendurchflußrate, eines in einer Rohrleitung strömenden Fluids (FS), welches Sensor-Modul umfaßt:
- einen in einem Lumen der Rohrleitung plazierten, insb. prismatoiden oder zylindrischen, Grundkörper (G_{S}) mit einem sich darin von einer Einlaßöffnung (E_{S}) bis zu einer davon entfernten Auslaßöffnung (A_{S}) erstreckenden, mithin mit dem Lumen der Rohrleitung kommunizierenden Strömungspfad (K_{S}) zum Führen eines vom in der Rohrleitung strömenden Fluid abgezweigten Fluid-Teilvolumens (FS') sowie
- ein am Strömungspfad (K_{S}) angeordnetes, insb. in diesen zumindest teilweise hineinragendes, Wandlerelement (W_{S}) zum Erzeugen wenigstens eines vom im Strömungspfad geführten Fluid beeinflußten Sensorsignals;
- wobei der Strömungspfad einen in die Einlaßöffnung mündenden, insb. ein kreiszylindrisches Lumen aufweisendes, Einlaufbereich (E_{K}), einen in die Auslaßöffnung mündenden, insb. ein kreiszylindrisches Lumen aufweisendes, Auslaufbereich (A_{K}) sowie einen mit dem Einlaufbereich und dem Auslaufbereich kommunizierenden geraden, insb. ein kreiszylindrisches Lumen aufweisendes, Zwischenbereich (Z_{K}) aufweist;
- wobei eine gedachte Mittelachse (L_{Z}) des Zwischenbereichs (Z_{K}) des Strömungspfads nicht-parallel, insb. senkrecht, zu einer gedachten Mittelachse (L_{RL}) des Rohrleitungsabschnitts (RL) sowie nicht-parallel, insb. senkrecht, zu einer gedachten Mittelachse des Einlaufbereichs (L_{E}) und/oder nicht-parallel, insb. senkrecht, zu einer gedachten Mittelachse des Auslaufbereichs (L_{A}) ist;
- und wobei im Strömungspfad, insb. in dessen Zwischenbereich, ein Staukörper zum Erzeugen von, insb. zu einer Karman'schen Wirbelstrasse aufgereihten, Wirbeln innerhalb des im Strömungspfad geführten Fluids plaziert ist.

2. Sensor-Modul nach Anspruch 1, wobei die gedachte Mittelachse des Auslaufbereichs parallel zur gedachten Mittelachse nämlichen Rohrleitungsabschnitts ist.

3. Sensor-Modul nach Anspruch 1, wobei die gedachte Mittelachse des Auslaufbereichs nicht-parallel, insb. senkrecht, zur gedachten Mittelachse nämlichen Rohrleitungsabschnitts verläuft.

4. Sensor-Modul nach einem der vorherigen Ansprüche, wobei die gedachte Mittelachse des Einlaufbereichs parallel zur gedachten Mittelachse des Auslaufbereichs ist.

5. Sensor-Modul nach einem der Ansprüche 1 bis 3, wobei die gedachte Mittelachse des Einlaufbereichs nicht-parallel, insb. senkrecht, zur gedachten Mittelachse des Auslaufbereichs verläuft.

6. Sensor-Modul nach einem der vorherigen Ansprüche, wobei der Strömungspfad einen größten Innen-Durchmesser aufweist, der kleiner als ein kleinster Innen-Durchmesser der Rohrleitung ist.

7. Sensor-Modul nach dem vorherigen Anspruch, wobei ein Durchmesserverhältnis, definiert durch ein Verhältnis des größten Innen-Durchmessers des Strömungspfads zum kleinsten Innen-Durchmesser der Rohrleitung kleiner als 0.2, insb. kleiner als 0.1 ist.

8. Sensor-Modul nach einem der vorherigen Ansprüche,
- wobei der Einlaufbereich trichterförmig ist; und/oder
- wobei der Auslaufbereich trichterförmig ist; und/oder
- wobei die gedachte Mittelachse des Einlaufbereichs parallel zur gedachten Mittelachse des Rohrleitungsabschnitts (RL) ist; und/oder
- wobei das Wandlerelement am Zwischenbereich des Strömungspfades angeordnet ist, insb. derart, daß es in diesen zumindest teilweise hineinragt; und/oder
- wobei im Strömungspfad, insb. in dessen Zwischenbereich, ein Staukörper zum Erzeugen von, insb. zu einer Karman'schen Wirbelstrasse aufgereihten, Wirbeln innerhalb des im Strömungspfad geführten Fluids plaziert ist; und/oder
- wobei ein das den Grundkörper aufnehmenden Lumen umgebender Rohrleitungsabschnitt (RL) kreiszylindrisch und/oder mittels eines geraden Rohres gebildet ist; und/oder
- wobei die Einlaßöffnung (E_{S}) einen radialen Abstand zur gedachten Mittelachse (L_{RL}) des Rohrleitungsabschnitts (RL) aufweist, der kleiner ist als ein radialer Abstand, den die Auslaßöffnung (A_{S}) zur gedachten Mittelachse (L_{RL}) nämlichen Rohrleitungsabschnitts (RL) aufweist.

9. Sensor-Modul nach einem der vorherigen Ansprüche, wobei die Einlaßöffnung auf einer, insb. vom Fluid senkrecht angeströmten und/oder als Prallfläche für anströmendes Fluid wirkenden, ersten Seite des Grundkörpers plaziert ist, und wobei die Auslaßöffnung auf einer relativ zu nämlicher erster Seite stromabwärts angeordneten zweiten Seite des Grundkörpers plaziert ist.

10. Sensor-Modul nach einem der vorherigen Ansprüche, weiters umfassend eine an der Rohrleitung, insb. wieder lösbar, fixierte, insb. kreiszylindrische, Hülse zum Haltern des innerhalb des Lumens plazierten Grundkörpers und/oder zum Aufnehmen von an das Wandlerelement angeschlossenen Anschlußleitungen.

11. Sensor-Modul nach einem der vorherigen Ansprüche, wobei das Wandlerelement ein Sensorsignal liefert, das mit einem innerhalb des im Strömungspfad geführten Fluids herrschenden, insb. veränderlichen und/oder zumindest zeitweise periodischen Schwankungen unterworfenen und/oder statischen, Druck korrespondiert, insb. derart, daß eine Signalfrequenz des Sensorsignals mit einer Frequenz periodischer Schwankungen eines Drucks korrespondiert.

12. Sensor-Modul nach einem der vorherigen Ansprüche, wobei das Wandlerelement ein Sensorsignal liefert, das mit einer innerhalb des im Strömungspfad geführten Fluids herrschenden Temperatur korrespondiert.

13. Sensor-Modul nach einem der vorherigen Ansprüche, weiters umfassend ein Heizelement zum Eintragen von Wärme in das im Strömungspfad geführte Fluid.

14. Meßsystem zum Ermitteln wenigstens eines Parameters, insb. einer Strömungsgeschwindigkeit und/oder einer Volumendurchflußrate, eines in einer Rohrleitung strömenden Fluids, welches Meßsystem ein Sensor-Modul (S) gemäß einem der vorherigen Ansprüche sowie ein Elektronik-Modul (E) mit einem Elektronik-Gehäuse und einer darin untergebrachten, insb. via Anschlußleitungen mit dem Wandlerelement elektrisch verbundenen, Umformer-Elektronik zum Verarbeiten des wenigstens einen vom Wandlerelement (W_{S}) erzeugten Sensorsignals umfaßt.

15. Meßsystem nach dem vorherigen Anspruch, wobei die Umformer-Elektronik mit dem Wandlerelement elektrisch gekoppelt und dafür eingerichtet ist, mittels dessen wenigstens einen Sensorsignals wenigstens einen den Parameter repräsentierenden Meßwert zu generieren.

## Claims

1. Sensor module (S) designed to measure at least a parameter, particularly a flow velocity and/or a volume flow rate, of a fluid (FS) flowing through a pipe, said sensor module comprising:
- a meter body (G_{S}), particularly prismatoid or cylindrical, placed in an interior channel of the pipe, with a flow path (K_{S}) extending from an inlet opening (E_{S}) to an outlet opening (A_{S}) at a distance from the former, wherein said path communicates with the interior channel of the pipe and is designed to conduct a fluid partial volume (FS') diverted from the fluid flowing through the pipe, as well as
- a converter element (W_{S}) arranged on the flow path (K_{S}), particularly projecting at least partially into said path, said converter element being designed to generate at least a sensor signal influenced by the fluid guided through the flow path;
- wherein the flow path has an inlet area (E_{K}) entering into the inlet opening and particularly featuring a circular cylindrical interior channel, an outlet area (A_{K}) entering into the outlet opening and particularly featuring a circular cylindrical interior channel, as well as a straight intermediate zone (Z_{K}) that communicates with the outlet area and particularly features a circular cylindrical interior channel;
- wherein an imaginary median axis (L_{Z}) of the intermediate zone (Z_{K}) of the flow path is non-parallel, particularly perpendicular, in relation to an imaginary median axis (L_{RL}) of the pipe section (RL) and non-parallel, particularly perpendicular, in relation to an imaginary median axis of the inlet area (L_{E}) and/or non-parallel, particularly perpendicular, in relation to an imaginary median axis of the outlet area (L_{A});
- and wherein a meter body is placed in the flow path, particularly in the intermediate zone, wherein said meter body is designed to generate vortices within the fluid conducted in the flow path, particularly vortices aligned to form a Karman vortex street.

2. Sensor module as claimed in Claim 1, wherein the imaginary median axis of the outlet area is parallel to the imaginary median axis of said section of the pipe.

3. Sensor module as claimed in Claim 1, wherein the imaginary median axis of the outlet area is non-parallel, particularly perpendicular, to the imaginary median axis of said section of the pipe.

4. Sensor module as claimed in one of the previous claims, wherein the imaginary median axis of the inlet area is parallel to the imaginary median axis of the outlet area.

5. Sensor module as claimed in one of the Claims 1 to 3, wherein the imaginary median axis of the inlet area is non-parallel, particularly perpendicular, to the imaginary median axis of the outlet area.

6. Sensor module as claimed in one of the previous claims, wherein the flow path has a maximum inner diameter that is greater than the minimum inner diameter of the pipe.

7. Sensor module as claimed in the previous Claim, wherein a diameter ratio, defined by a ratio of the largest inner diameter of the flow path to the smallest inner diameter of the pipe is less than 0.2, particularly less than 0.1.

8. Sensor module as claimed in one of the previous claims,
- wherein the inlet area is in the form of a funnel; and/or
- wherein the outlet area is in the form of a funnel; and/or
- wherein the imaginary median axis of the inlet area is parallel to the imaginary median axis of the section of the pipe (RL); and/or
- wherein the converter element is arranged on the intermediate zone of the flow path, particularly in such a way that it partially projects into said path; and/or
- wherein a meter body is placed in the flow path, particularly in the intermediate zone, wherein said meter body is designed to generate vortices within the fluid conducted in the flow path, particularly vortices aligned to form a Karman vortex street; and/or
- wherein a pipe section (RL) surrounding the interior channel that receives the meter body is formed in a circular cylindrical manner and/or using a straight pipe; and/or
- wherein the inlet opening (E_{S}) has a radial distance in relation to the imaginary median axis (L_{RL}) of the pipe section (RL), which is less than a radial distance which the outlet opening (A_{S}) has in relation to the imaginary median axis (L_{RL}) of said pipe section (RL).

9. Sensor module as claimed in one of the previous claims, wherein the inlet opening is located on a first side of the meter body - particularly with fluid flow perpendicular to the meter body and/or with said meter body acting as the deflector plate for flowing fluid, and
wherein the outlet opening is placed on a second side of the meter body, which is arranged downstream from said first side.

10. Sensor module as claimed in one of the previous claims, further comprising a sleeve, particularly circular cylindrical, fixed on the pipe, particularly in a detachable manner, said sleeve being designed to hold the meter body placed inside the interior channel and/or designed to receive connection cables connected to the converter element.

11. Sensor module as claimed in one of the previous claims, wherein the converter element supplies a sensor signal, which corresponds to a pressure present in the fluid guided through the flow path, said pressure particularly being variable and/or at least temporarily subject to periodic fluctuations and/or static pressure, particularly in such a way that a signal frequency of the sensor signal corresponds to a frequency of periodic fluctuations of a pressure.

12. Sensor module as claimed in one of the previous claims, wherein the converter element delivers a sensor signal, which corresponds to a temperature present in the fluid conducted in the flow path.

13. Sensor module as claimed in one of the previous claims, further comprising a heating element for the introduction of heat into the fluid guided in the flow path.

14. Measuring system designed to determine at least a parameter, particularly a flow velocity and/or a volume flow rate, of a fluid flowing through a pipe, wherein said measuring system comprises a sensor module (S) as claimed in one of the previous claims, as well as an electronics module (E) with an electronics housing and a transmitter electronics unit which is accommodated in the housing and is particularly connected electrically to the converter element via connecting cables, said transmitter electronics unit being designed to process the at least one sensor signal generated by the converter element (W_{S}).

15. Measuring system as claimed in the previous Claim, wherein the transmitter electronics unit is electrically coupled with the converter element and is designed to generate a measured value representing the parameter using at least a sensor signal.

## Revendications

1. Module capteur (S) destiné à la mesure d'au moins un paramètre, notamment une vitesse d'écoulement et/ou un débit volumique, d'un fluide (FS) s'écoulant dans une conduite, lequel module capteur comprend :
- un corps de base (G_{S}), notamment prismatoïde ou cylindrique, placé dans un canal intérieur de la conduite, avec un chemin d'écoulement (K_{S}) s'étendant depuis l'ouverture d'entrée (E_{S}) jusqu'à une ouverture de sortie (A_{S}) distante de la première, lequel chemin communique avec le canal intérieur de la conduite et est destiné à guider un volume partiel de fluide (FS') dérivé du fluide s'écoulant dans la conduite, ainsi que
- un élément convertisseur (W_{S}) disposé sur le chemin d'écoulement (K_{S}), notamment pénétrant au moins partiellement dans celui-ci, lequel élément convertisseur est destiné à générer au moins un signal de capteur influencé par le fluide guidé dans le chemin d'écoulement ;
- le chemin d'écoulement présentant une zone d'entrée (E_{K}) débouchant dans l'ouverture d'entrée et comprenant notamment un canal intérieur cylindrique circulaire, une zone de sortie (A_{K}) débouchant dans l'ouverture de sortie et comprenant notamment un canal intérieur cylindrique circulaire, ainsi qu'une zone intermédiaire (Z_{K}) droite communiquant avec la zone d'entrée et la zone de sortie et comprenant notamment un canal intérieur cylindrique circulaire ;
- un axe médian imaginaire (L_{Z}) de la zone intermédiaire (Z_{K}) du chemin d'écoulement étant non parallèle, notamment perpendiculaire, par rapport à un axe médian imaginaire (L_{RL}) de la section de conduite (RL) ainsi que non parallèle, notamment perpendiculaire, par rapport à un axe médian imaginaire de la zone d'entrée (L_{E}) et/ou non parallèle, notamment perpendiculaire, par rapport à un axe médian imaginaire de la zone de sortie (L_{A}) ;
- et module capteur pour lequel est placé, dans le chemin d'écoulement, notamment dans sa zone intermédiaire, un corps de retenue destiné à générer des tourbillons, notamment aligné pour former une allée de tourbillons selon Karman, dans le fluide guidé dans le chemin d'écoulement.

2. Module capteur selon la revendication 1, pour lequel l'axe médian imaginaire de la zone de sortie est parallèle à l'axe médian imaginaire de la dite section de conduite.

3. Module capteur selon la revendication 1, pour lequel l'axe médian imaginaire de la zone de sortie est non parallèle, notamment perpendiculaire, à l'axe médian imaginaire de la dite section de conduite.

4. Module capteur selon l'une des revendications précédentes, pour lequel l'axe médian imaginaire de la zone d'entrée est parallèle à l'axe médian imaginaire de la zone de sortie.

5. Module capteur selon l'une des revendications 1 à 3, pour lequel l'axe médian imaginaire de la zone d'entrée est non parallèle, notamment perpendiculaire, à l'axe médian imaginaire de la zone de sortie.

6. Module capteur selon l'une des revendications précédentes, pour lequel le chemin d'écoulement présente un diamètre intérieur maximal, qui est supérieur au diamètre intérieur minimal de la conduite.

7. Module capteur selon la revendication précédente, pour lequel un rapport de diamètres, défini par un rapport entre le plus grand diamètre intérieur du chemin d'écoulement et le plus petit diamètre intérieur de la conduite est inférieur à 0,2, notamment inférieur à 0,1.

8. Module capteur selon l'une des revendications précédentes,
- pour lequel la zone d'entrée est en forme d'entonnoir ; et/ou
- pour lequel la zone de sortie est en forme d'entonnoir ; et/ou
- pour lequel l'axe médian imaginaire de la zone d'entrée est parallèle à l'axe médian imaginaire de la section de conduite (RL) ; et/ou
- pour lequel l'élément convertisseur est disposé dans la zone intermédiaire du chemin d'écoulement, notamment de telle sorte qu'elle pénètre partiellement dans celui-ci ; et/ou
- pour lequel est placé - dans le chemin d'écoulement, notamment dans sa zone intermédiaire, un corps de retenue destiné à générer des tourbillons, notamment aligné pour former une allée de tourbillons selon Karman - dans le fluide guidé dans le chemin d'écoulement ; et/ou
- pour lequel une section de conduite (RL) entourant le canal intérieur recevant le corps de base est formée de façon cylindrique circulaire et/ou au moyen d'un tube droit ; et/ou
- pour lequel l'ouverture d'entrée (E_{S}) présente une distance radiale par rapport à l'axe médian imaginaire (L_{RL}) de la section de conduite (RL), qui est inférieure à une distance radiale que présente l'ouverture de sortie (A_{S}) par rapport à l'axe médian imaginaire (L_{RL}) de la dite section de conduite (RL).

9. Module capteur selon l'une des revendications précédentes, pour lequel l'ouverture d'entrée est placée sur un premier côté - notamment balayé perpendiculairement par le fluide et/ou agissant en tant que surface d'impact pour le fluide affluant - du corps de base, et
pour lequel l'ouverture de sortie est placée sur un deuxième côté - disposé en aval par rapport au premier côté - du corps de base.

10. Module capteur selon l'une des revendications précédentes, comprenant en outre une douille, notamment cylindrique circulaire, fixée sur la conduite, notamment de manière amovible, laquelle douille est destinée au maintien du corps de base placé à l'intérieur du canal intérieur et/ou destinée à la réception de câbles de raccordement raccordés à l'élément convertisseur.

11. Module capteur selon l'une des revendications précédentes, pour lequel l'élément convertisseur délivre un signal de capteur, qui correspond à une pression régnant dans le fluide guidé dans le chemin d'écoulement, laquelle pression est notamment variable et/ou au moins temporairement soumise à des fluctuations périodiques et/ou statique, notamment de telle manière qu'une fréquence du signal de capteur correspond à une fréquence de fluctuations périodiques d'une pression.

12. Module capteur selon l'une des revendications précédentes, pour lequel l'élément convertisseur délivre un signal de capteur, qui correspond à une température régnant dans le fluide guidé dans le chemin d'écoulement.

13. Module capteur selon l'une des revendications précédentes, comprenant en outre un élément chauffant destiné à introduire de la chaleur dans le fluide guidé dans le chemin d'écoulement.

14. Système de mesure destiné à la détermination d'au moins un paramètre, notamment une vitesse d'écoulement et/ou un débit volumique, d'un fluide s'écoulant dans une conduite, lequel système de mesure comprend un module capteur (S) conformément à l'une des revendications précédentes, ainsi qu'un module électronique (E) avec un boîtier électronique et une électronique de transmetteur logée dans le boîtier, notamment reliée électriquement avec l'élément convertisseur via des câbles de raccordement, laquelle électronique de transmetteur est destinée à traiter l'au moins un signal de capteur généré par l'élément convertisseur (W_{S}).

15. Système de mesure selon la revendication précédente, pour lequel l'électronique de transmetteur est couplée électriquement avec l'élément convertisseur et est conçue de telle sorte à générer, au moyen de l'au moins un signal de capteur, au moins une valeur mesurée représentant le paramètre.
